# EUROPEAN PATENT APPLICATION

(11) **EP 2 101 489 A2**
(43) Date of publication of application: **16.09.2009**
(21) Application number: 09154370.2
(22) Date of filing: 05.03.2009
(51) Int. Cl.: H04N 5/44

(54) **Informative and commercial utilization of televisions**

(30) Priority: 11.03.2008 TR 200801597
(71) Applicant: Vestel Elektronik Sanayi ve Ticaret A.S., 45030 Manisa (TR)
(72) Inventor: Yalçin, Yanki, 34469, Istanbul (TR)
(74) Representative: Cayli, Hülya

(57) **Abstract**

This invention relates to a method for utilizing the time gaps arising during some applications, such as switching channels, turning-on and turning-off or during no signal situations, in a television system. The said method comprises the steps of storing at least one image frame, text frame or frame set in a memory space, identifying the current screen's background colour and text format information and characterized by further comprising the steps of taking a frame or frame set from the memory space according to the identified background colour and text format information, modifying the frame or frame set according to said background colour and text format information, displaying the modified frame or frame set on the screen when a time gap starts, removing the frame or frame set and displaying the broadcasting signal on the screen when the time gap finishes.

## Description

### Technical Field

This invention relates to a method for utilizing the time gaps arising during some applications, such as switching channels, turning-on and turning-off or during no signal situations, in a television system.

### Prior Art

In television technology, one of the main problems to be solved is the time gaps arising during some applications such as switching channels, turning-on and turning-off or during no signal situations. This time period is inevitable due to technological limitations. The blank frame being formed during this period can disturb the users because of sharp colour transits.

In the prior art, there are several applications developed for decreasing the time gap arising when channels are switched. Also some applications are developed such as displaying a most familiar image stored in a memory on the screen, for providing a smooth view transition, and a less human eye interaction during these time gaps. (Such as if a football match is on the screen, in channel switching period the screen will be painted to a stored frame in the memory which most resembles to green)

In JP2000041197, a method for shortening the time gap, that is caused when the channels are switched, and for attaining the smooth switching of channels is provided, by adding a storage unit to a TV receiver. This storage unit is used for storing the video still pictures on plural screens and displaying the stored images before the broadcasted images are actually outputted on screen in a channel switching mode.

In CN1463143, in process of changing TV station, a stable still image frame is displayed, so that the light ray in the environment is not changed and visual impaction is eliminated. Annoyance in the time for waiting the channel to be changed can be alleviated.

Current technologies can handle the situations where no signal is available in the channel frequency. In this situation, user or video recorder is informed by a message or a test pattern to signify and handle the no signal situation. During this gap usually a black screen is painted. Some of the methods in the prior art are aiming to shorten the transition time. The others are aiming to employ the time gap, with a still image. In these methods, generally a previously stored image is displayed on the screen during the transition, directly without any modification. Generally the most suitable image is chosen from the memory, which has the nearest colour with the current screen background, in order to provide a smooth transition. Since these images are not adaptively used, but directly chosen and displayed, the colour alternatives are limited with the colours of those images previously stored. So that, these methods can not provide a perfect smooth transition unless there exists images for any colour possibility in the memory, which also necessitates a large memory space for this application.

### Object of the Invention

The object of the present invention is to utilize the time gaps in television systems by providing a method which displays an image frame, text frame or frame set (previously stored in a memory) on the screen during these time gaps, after changing its colour or text format in order to put into a most suitable form for a smooth transition.

Another object of the present invention is to provide the opportunity of storing any image frame, text frame or frame set (to be displayed on the screen during any time gap) to the user.

### Brief Description of the Drawings

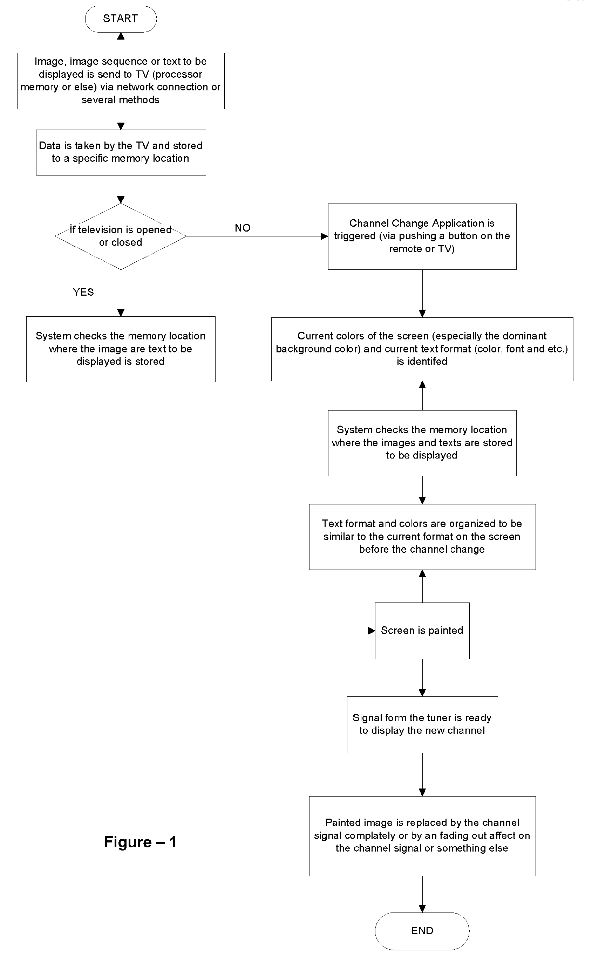

Figure 1: Block diagram of one embodiment of the present method.

### Detailed Description of the Invention

Due to some limitations in tuner, main board architecture, ICs or else, a time period comes into being during switching channels or several applications (turn-on, turn-off). With the help of the developments in the technology, this time gap is reduced below 1.5 seconds in television systems. During this time period or during no signal situations, generally a black screen, a still frame or a frame sequence is shown as the background of image.

The main idea of the present invention is to utilize the identification of the current text format and dominant colours on the screen and to use this knowledge to paint the screen with an identified text frame, image frame or frame set located in a memory location (which may be stored there previously during the production or remotely by any kind of method such as over IP, RF, digital connection or may be stored by the user).

The previously stored text frames, image frames or frame sets are taken from the memory. By using the dominant colour and text format information, these frames are modified and generated in a suitable colour and/or text format. Said frames or frame sets are modified in order to have the same or nearly the same colour and text format with said current screen's background. As a result of this solution an effective use of these time gaps is provided.

The text frame, frame set or image frame to be displayed on the screen not only can be stored in a memory but also it can be set or triggered by the broadcast or through a network. These frames can be previously loaded to the TV by the manufacturer, can be loaded by the user, or can be taken through a network connection, by a network connection card.

The data (including the text frame, frame set, image frame to be displayed on the screen) is stored in a specific memory location and this location is checked when any one of the system turn-on, turn-off, channel change (or else) action is taken, or no signal situation is identified. If there exists a frame, or a frame set stored in this memory location, the system gets this data from the memory, modifies it and paints the screen with this modified data.

In an embodiment of the invention, there exists more than one still frame (text or image) or frame set in the memory, or uploaded from the network; and the system has the chance to select any one of them. The system periodically identifies the current screen's dominant picture color and text format, and stores this information into a second memory space. When a channel change, turn-on, turn-off action is taken or no signal situation is identified, firstly this information is taken from the second memory space, and by using this information the most suitable text, image or frame set is selected from the first memory, and modified according to the information taken from the second memory. For example if the current screen's dominant color is purple, the selected image frame, text frame or frame set will be painted to purple. This selection and modification can be done by a microcontroller.

Since the current color and text format of the screen is identified and taken as the basis for the modification of the image or text frame (or frame set) to be displayed, different alternatives from the first memory can be used.

In digital broadcasting the color variation, dominant background color and text format information is given to the system in mpeg format, so in another embodiment of the invention this necessary information can be obtained directly from the broadcasting signal.

In another embodiment of the invention, any frame or frame set to be displayed on the screen during the time gap is stored in a first memory space. An identification unit identifies the current screens dominant background color and text format and this information are stored in a second memory space. This identification procedure can be performed by using any of several known methods. Also for digital broadcasting the dominant background color and text format information can be taken in mpeg format and again stored in the second memory. This identification can be performed at the instant of any of the actions causing the time gap (such as when a channel change, turn-on, turn-off action is taken or a no-signal situation is occurred) is taken, or can be performed periodically. For the systems performing the identification of the background color and text format periodically, information in the second memory can be updated, and for necessary conditions the lastly updated information can be used. A processor activates necessary parts when a time gap is identified and, takes the text format and dominant background color information from the second memory space, selects a suitable frame or frame set from the first memory space, and modifies this selected frame or frame set according to the information taken from the first memory space; applies the modified frame or frame set to the screen, and replaces the applied frame or frame set when the time gap is finished, and applies the channel signal to the screen. For the time gaps arising when the system is turned-on, the lastly updated background color and text format information can be used and the selected frame or frame set can be modified according to this information.

This method provides an efficient utilization for the disturbing time gaps occurring in some applications such as channel change, turn-on and turn-off or no-signal situations and provides a smooth transition of colours and text format. Several technologies may be used to display a frame or frame set to the screen, for modifying the image or text frame to be displayed on the screen or to identify the current text format and colour.

## Claims

1. A method for utilizing the time gaps arising during some applications such as switching channels, turning-on and turning-off or during no signal situations in a television system comprising the steps of; storing at least one image frame, text frame or frame set in a first memory space, identifying the current screen's background colour and text format information, **characterized by** further comprising the steps of:
- storing the identified background colour and text format information into a second memory space
- taking a frame or frame set from the first memory space
- taking the background colour and text format information from the second memory space
- modifying the frame or frame set according to said background colour and text format information
- when a time gap starts, displaying the modified frame or frame set on the screen
- removing the frame or frame set and displaying the broadcasting signal on the screen when the time gap finishes

2. A method for utilizing the time gaps arising during some applications such as switching channels, turning-on and turning-off or during no signal situations in a television system comprising the steps of; storing at least one image frame, text frame or frame set in a first memory space, identifying the current screen's background colour and text format information, **characterized by** further comprising the steps of:
- taking a frame or frame set from the first memory space
- modifying the frame or frame set according to said background colour and text format information
- when a time gap starts, displaying the modified frame or frame set on the screen
- removing the frame or frame set and displaying the broadcasting signal on the screen when the time gap finishes

3. A method according to claim 1 or 2 wherein, said frames or frame sets are loaded to the first memory space by the manufacturer during the production.

4. A method according to claim 1 or 2 wherein, said frames or frame sets are loaded to the first memory space by the user.

5. A method according to claim 1 or 2 wherein, said frames or frame sets are loaded to the first memory space remotely through a network connection.

6. A method according to claim 1 or 2 wherein, said frames or frame sets are modified in order to have the same or nearly the same colour and text format with said current screen's background.

7. A method according to claim 1 wherein, said current screen's background colour and text format is periodically identified and the information in the second memory space is updated.

8. A method according to claim 1 or 2 wherein, said current screen's background colour and text format is identified when a time gap is occurred.

9. A method according to claim 1 wherein, said current screen's background colour and text format information are obtained directly from the broadcasting signal.

10. A television system for utilizing the time gaps arising during some applications such as switching channels, turning-on and turning-off or during no signal situations comprising a first memory space for storing image frames, text frames or frame sets and a unit for identifying the current screen's background colour and text format information **characterized by** further comprising:
- a second memory space for storing the identified background colour and text format information
- a processor for:
○ taking a frame or frame set from the first memory space
○ taking the background colour and text format information from the second memory space
○ modifying the frame or frame set according to said background colour and text format information
○ when a time gap starts, displaying the modified frame or frame set on the screen
○ removing the frame or frame set and applying the broadcasting signal to the screen when the time gap finishes

11. A television system for utilizing the time gaps arising during some applications such as switching channels, turning-on and turning-off or during no signal situations comprising a first memory space for storing image frames, text frames or frame sets and a unit for identifying the current screen's background colour and text format information **characterized by** further comprising:
- a processor for:
○ taking a frame or frame set from the first memory space
○ modifying the frame or frame set according to said background colour and text format information
○ when a time gap starts, displaying the modified frame or frame set on the screen
○ removing the frame or frame set and displaying the broadcasting signal on the screen when the time gap finishes

12. A system according to claim 10 or 11 wherein, said frames or frame sets are loaded to the first memory space by the manufacturer during the production.

13. A system according to claim 10 or 11 wherein, said frames or frame sets are loaded to the first memory space by the user.

14. A system according to claim 10 or 11 wherein, said frames or frame sets are loaded to the first memory space remotely through a network connection.

15. A system according to claim 10 or 11 wherein, said frames or frame sets are modified in order to have the same or nearly the same colour and text format with said current screen's background.

16. A system according to claim 10 wherein, said current screen's background colour and text format is periodically identified and the information in the second memory space is updated.

17. A system according to claim 10 or 11 wherein, said current screen's background colour and text format is identified when a time gap is occurred.

18. A system according to claim 10 wherein, said current screen's background colour and text format information are obtained directly from the broadcasting signal.
